# EUROPÄISCHE PATENTSCHRIFT

(11) **EP 1 099 045 B1**
(45) Veröffentlichungstag und Bekanntmachung des Hinweises auf die Patenterteilung: **23.10.2002**
(21) Anmeldenummer: 99938321.9
(22) Anmeldetag: 22.07.1999
(51) Int. Cl.: F01N 1/06, G10K 11/178

(54) **VORRICHTUNG UND VERFAHREN ZUR REDUZIERUNG DER SCHALLEMISSION BEI VERBRENNUNGSMOTOREN UND ZU DEREN DIAGNOSE**
DEVICE AND METHOD FOR REDUCING THE NOISE EMISSIONS OF INTERNAL COMBUSTION ENGINES AND FOR DIAGNOSING THE SAME
DISPOSITIF ET PROCEDE PERMETTANT DE REDUIRE LES EMISSIONS SONORES DANS LE CAS DE MOTEURS A COMBUSTION INTERNE ET DE LES DIAGNOSTIQUER

(30) Priorität: 22.07.1998 DE 19832979; 23.09.1998 DE 19843615
(43) Veröffentlichungstag der Anmeldung: 16.05.2001
(60) Teilanmeldung: 02000160.8
(73) Patentinhaber: Nagel, Friedmund, 73119 Zell (DE)
(72) Erfinder: Nagel, Friedmund, 73119 Zell (DE)
(74) Vertreter: Heselberger, Johannes
(86) Internationale Anmeldenummer: EP9905251
(87) Internationale Veröffentlichungsnummer: WO00005489

(56) Entgegenhaltungen:
- WO-A-97/20307
- US-A- 4 665 549
- US-A- 5 222 148
- US-A- 5 377 275
- PATENT ABSTRACTS OF JAPAN vol. 1995, no. 07, 31. August 1995 (1995-08-31) & JP 07 098591 A (FUJITSU TEN LTD), 11. April 1995 (1995-04-11)
- PATENT ABSTRACTS OF JAPAN vol. 1995, no. 06, 31. Juli 1995 (1995-07-31) & JP 07 064568 A (NIPPONDENSO CO LTD), 10. März 1995 (1995-03-10) in der Anmeldung erwähnt

## Beschreibung

Die vorliegende Erfindung bezieht sich auf eine Vorrichtung und ein Verfahren zur Reduzierung der Schallemission von Verbrennungsmotoren und zu deren Diagnose.

Verbrennungsmotoren, wie sie in Automobilen oder Motorrädern, aber auch Kleinmotorgeräten, wie z. B. Rasenmähern oder Motorsägen, verwendet werden, geben kontinuierlich Abgase des Verbrennungsvorgangs aus dem Verbrennungsraum an die Umgebung ab, die durch den Verbrennungsvorgang in Schwingung versetzt wurden und damit eine Schallquelle von erheblicher Intensität darstellen.

Herkömmlich werden Schalldämpfer im Abgasstrom von Verbrennungsmotoren angeordnet, um die Schwingungen und damit die Schallemission der Abgase zu dämpfen. Bei Automobilen werden oft zwei Schalldämpfer verwendet, ein Vorschalldämpfer und ein Endschalldämpfer. Die Funktion des Vorschalldämpfers wird heute häufig auch durch einen Katalysator zur Abgasreinigung übernommen. Die Dämpfung der Abgase in Schalldämpfern führt zu einem erhöhten Abgasgegendruck und damit zu Leistungsverlust bzw. Mehrverbrauch des Motors. Außerdem benötigen die Schalldämpfer nicht unerheblichen Bauraum im Motorbereich oder am Fahrzeugboden und stellen ein nicht unerhebliches Zusatzgewicht am Fahrzeug dar.

Zur Vermeidung dieser Nachteile werden im Stand der Technik bereits folgende Verfahren und Vorrichtungen zur Reduzierung der Schallemission von Verbrennungsmotoren vorgeschlagen:

Zur Reduzierung der Schallemission von Verbrennungsmotoren wird in der US-Patentschrift 5,457,749 eine Schalldämpfungsvorrichtung vorgeschlagen, bei welcher Abgasgeräusche durch Ausbringen eines Gegengeräusches mittels seitlich von dem Abgasstrom getrennt angeordneten Lautsprechern zumindest teilweise ausgelöscht werden sollen. Die Lautsprecher strahlen dabei in ein mit dem Abgasstrom kommunizierendes Hilfsvolumen ab.

Die US Patentschrift 5,222,148 bezieht sich auf ein Verfahren zur aktiven Dämpfung von Motorgeräuschen im Einlaß- oder Abgasbereich. Hierbei wird durch Sensoren die Stellung der Drosselklappe oder die Motordrehzahl festgestellt und an eine elektronische Kontrolleinheit weitergegeben. Diese steuert seitlich der Gasströmung im Einlaß- oder Abgasbereich angeordnete Lautsprecher an, die ein Gegengeräusch erzeugen. Im Einlaß- oder Abgasbereich angebrachte Mikrofone nehmen den Restschall auf und geben ein Fehlersignal an die elektronische Kontrolleinheit weiter.

In der japanischen Patentanmeldung 8-137478 wird eine Vorrichtung zur aktiven Reduzierung von Geräuschen in Abgasleitungen von Motoren vorgeschlagen. Diese weist von der zentralen Abgasleitung im 90°-Winkel abzweigende, sich gegenüberliegende Rohre auf, an deren Enden Lautsprecher angeordnet sind. An der Abgasleitung selbst sind Sensor- und Fehlermikrofone angeordnet, die ebenso wie die Lautsprecher mit einer Kontrolleinheit in Verbindung stehen.

Die japanische Patentanmeldung 9-44167 betrifft eine Vorrichtung zur Reduzierung von Abgasgeräuschen von Motoren. Diese umfaßt ähnlich dem Prinzip der Vorrichtung aus JP 8-137478 ein Rohr, welches von der Abgasleitung seitlich abzweigt und an dessen Ende sich ein Lautsprecher befindet, der ein Gegengeräusch aussendet.

Die japanische Patentanmeldung JP 8-123435 bezieht sich auf eine Vorrichtung zur Reduzierung von Einlaßgeräuschen eines Motors, wobei ein seitlich im Einlaßbereich angeordneter Lautsprecher Gegenschall aussendet, um Einlaßgeräusche zu kompensieren.

In der japanischen Patentanmeldung JP 7-98591 ist allgemein eine Anordnung zur Reduzierung von Geräuschen in einer Leitung beschrieben, wobei der Lautsprecher mittig innerhalb der Leitung angeordnet ist.

Die US-Patentschrift 4,665,549 betrifft eine Vorrichtung zur Reduzierung von Geräuschen in einer Leitung. In dieser Leitung befindet sich ein Schalldämpfer mit einem nach vorne gerichteten und einem nach hinten gerichteten Segment. Der Lautsprecher zur Reduzierung der Geräusche wird dabei so in dem nach hinten gerichteten Segment angeordnet, dass er in den schmalen Spalt zwischen den beiden Segmenten und später in den Bereich um den Schalldämpfer abstrahlt.

Schließlich wird in der japanischen Patentanmeldung JP 7-64568 ein Schall abstrahlender Körper beschrieben, der zur aktiven Geräuschkontrolle von Verbrennungsmotoren eingesetzt werden kann. Dieser Körper besitzt ein Abgasrohr, an welchem seitlich Lautsprecher angeordnet sind, deren Rückseiten mit einem Kühlmittel gekühlt werden.

Die Aufgabe der vorliegenden Erfindung besteht darin, eine Vorrichtung zur Minderung der Schallemission von Verbrennungsmotoren durch Erzeugung eines Kompensationsschalls bereitzustellen, welche ohne Schalldämpfer oder zumindest mit kleineren Schalldämpfern unter Vermeidung der Nachteile herkömmlicher Schalldämpferlösungen auskommt und eine verbesserte Schallreduzierung, insbesondere mit kontrollierteren akustischen Bedingungen, bewirkt. Dabei soll die Vorrichtung einfach aufgebaut und damit kostengünstig herstellbar sein.

Diese Aufgabe wird durch eine Vorrichtung zur Reduzierung der Schallemission von Verbrennungsmotoren in einer Abgasleitung, die einen Abgasstrom führt, gelöst. Die Vorrichtung weist hierfür mindestens einen ersten Schallwandler zur Umwandlung von Schallwellen in erste Signale, die ein Maß für die Frequenz, Amplitude und für die Phase der Schallwellen sind, eine elektronische Steuereinheit zur Umwandlung der ersten Signale in zweite Signale und mindestens einen zweiten Schallwandler, der zentral im Abgasstrom angeordnet ist, zur Umwandlung der Signale in Kompensationsschallwellen, die eine Frequenz, Amplitude und Phase aufweisen, so daß sich die Schallwellen und die Kompensationsschallwellen wenigstens teilweise auslöschen, auf.

Der Begriff Abgasleitung umfaßt die gesamte Abgasrührung von dem Verbrennungsmotor bis zum Endrohrausgang, einschließlich Abgaskrümmer, Katalysator und gegebenenfalls Schalldämpfer.

Der erste Schallwandler kann ein Mikrofon sein, das die Schallwellen, die von dem Abgasstrom ausgesandt werden, aufnimmt und in ein erstes Signal, etwa ein elektrisches oder optisches Signal umwandelt, das ein Maß für die Frequenz, Amplitude und für die Phase der Schallwellen am Ort des Schallwandlers ist. Der zweite Schallwandler kann ein Lautsprecher sein, der aufgrund des ersten Signals des ersten Schallwandlers, welches in der elektronischen Steuereinheit in ein zweites Signal umgewandelt wird, Kompensationsschallwellen aussendet, die eine Frequenz, Amplitude und eine Phase aufweisen, so daß sich die Schallwellen und die Kompensationsschallwellen mindestens teilweise gegenseitig auslöschen. Die Schallwellen und die Kompensationsschallwellen können dabei gleiche Frequenz und Amplitude und entgegengesetzte Phase aufweisen. Vorzugsweise ist jedoch die Amplitude der Schallwellen etwas größer als die Amplitude der Kompensationsschallwellen. so daß ein Restschall des Verbrennungsmotors hörbar bleibt, um Passanten vor herannahenden Fahrzeugen zu warnen, oder um dem Fahrzeug ein bestimmtes erwünschtes Klangbild ("Sound") zu verleihen. Ein weiterer Grund für die Beibehaltung eines Restschallpegels des Motors liegt darin, daß bei einer nahezu vollständigen Kompensation des Abgasschalls andere Geräusche in unerwünschter Weise akustisch in den Vordergrund treten.

Der zweite Schallwandler ist zentral in dem Abgasstrom des Verbrennungsmotors angeordnet. Die Anordnung des zweiten Schallwandlers direkt in dem Abgasrohr erlaubt eine direkte Einwirkung auf die von den Abgasen ausgesandten Schallwellen. Die zentrale Anordnung in dem Abgasstrom wird gewählt, weil die dadurch erreichten seitlich begrenzten symmetrischen akustischen Verhältnisse die Wirksamkeit der Schallkompensation deutlich erhöhen und die Schallkompensationsvorrichtung insgesamt vereinfachen. Insbesondere werden Ungenauigkeiten der Schallkompensation durch Laufzeitunterschiede der Schallwellen von mehreren dezentralen Lautsprechern und störende Interferenzen vermieden, die bei dezentraler, insbesondere gegenüberliegender Anordnung mehrerer Lautsprecher auftreten können. Eine symmetrische Bauweise schafft vor allem auch kontrollierte akustische Bedingungen.

Die erfindungsgemäße Vorrichtung weist außerdem eine Kühleinrichtung zur Kühlung des zweiten Schallwandlers und in einer bevorzugten Ausführungsform auch des ersten Schallwandlers auf. Hierfür sind die Schallwandler vorzugsweise mittels einer Verkleidung von der direkten Beaufschlagung mit dem Abgasstrom abgeschirmt. Zur Kühlung kann Außenluft durch entsprechende Öffnungen in der erfindungsgemäßen Vorrichtung in das Innere der Verkleidung hineingeführt werden. Die Kühlluft kann dann an dem Schallwandler bzw. den Schallwandlern vorbei nach außen in die Abgasleitung in Richtung des Abgasstroms abfließen und verhindert gleichzeitig das Entstehen rückströmender Abgasturbulenzen, welche die Schallwandler beaufschlagen könnten. Die Kühlluft fließt entweder automatisch aufgrund des dynamischen Drucks nach, der durch den Abgasstrom in der Ebene der Schallwandler erzeugt wird, oder kann unter entsprechendem Druck beispielsweise durch einen Ventilator in die Verkleidung gefördert werden. Auf diese Weise können die Schallwandler thermisch gut kontrolliert werden.

Eine bevorzugte Ausfuhrungsform der vorliegenden Erfindung sieht eine zentrale Anordnung auch des ersten Schallwandlers im Abgasstrom vor. Denn dadurch erfaßt der erste Schallwandler unmittelbar den Schall in Frequenz, Amplitude und Phase an dem Ort, an dem der zweite Schallwandler diesen Schall auch kompensieren soll. Außerdem kann der erste Schallwandler in diesem Fall mit dem zweiten Schallwandler zu einer kompakteren Einheit zusammengefaßt werden, die den Abgasstrom in dem Abgasrohr weniger stört und damit die Effizienz der Schallkompensation erhöht. Besonders kompakt kann diese Einheit ausfallen, wenn der erste Schallwandler in dem zweiten Schallwandler angeordnet wird. Dabei kann der erste Schallwandler einfach nur in einem Ausschnitt in dem zweiten Schallwandler angeordnet sein, also von diesem räumlich umgeben, aber an sich selbständig sein. Die beiden Schallwandler können aber auch voll ineinander integriert sein, also ein einziges integriertes Bauteil bilden.

Im Rahmen der vorliegenden Erfindung umfaßt der Begriff "zentral" auch eine im wesentlichen zentrale, also mittige Anordnung der Schallwandler. Gemäß der vorliegenden Erfindung kann die Vorrichtung auch mehrere erste und zweite Schallwandler aufweisen. In diesem Fall müssen die ersten und zweiten Schallwandler dann derart und im wesentlichen zentral angeordnet werden, daß sie symmetrische akustische Verhältnisse gewährleisten.

Eine geringfügige Abweichung von der geometrisch zentralen Anordnung kann aufgrund einer Schallfeldanalyse an dem Anbringungsort des ersten oder zweiten Schallwandlers angezeigt sein, etwa wenn die Hauptausbreitungsrichtung des Schalls nicht achsenparallel zur Längsachse der Abgasleitung oder zur Ausbreitungsrichtung des Abgasstroms verläuft.

Der registrierte Schall kann in einer elektronischen Steuereinheit, z. B. einem Mikroprozessor, einem oder mehreren Verarbeitungsschritten unterzogen werden, zum Beispiel einer Fourieranalyse, um den Kompensationsschall möglichst genau zu wählen. Die Verwendung eines Mikroprozessors erlaubt überdies die Steuerung der Kompensationsschallemission nach einem Kennfeld, etwa in Abhängigkeit von Parametern, welche die Beschaffenheit der Abgasschallwellen beschreiben, oder in Abhängigkeit von Fahrzeug- oder Motorparametern, wie Geschwindigkeit, Drehzahl, oder Gaspedalstellung. Zum Beispiel kann bei steigender Geschwindigkeit oder Drehzahl der äußere Schallpegel des Fahrzeugs dadurch konstant gehalten werden, daß die prozentuale Kompensation des Abgasschalls immer höher wird, also die Amplitude der Kompensationsschallwellen relativ immer mehr an die Amplitude der Schallwellen angepaßt wird. Ein Mikroprozessor kann auch eine Adaptierung der Schallwellenkompensation, etwa von starker auf weniger starke Kompensation ermöglichen.

Vorzugsweise ist der zweite Schallwandler in der Abgasleitung in Richtung des Abgasstroms angeordnet, so daß die Kompensationsschallwellen in Strömungsrichtung des Abgasstromes ausgesandt werden. Damit ist der zweite Schallwandler gegen eine direkte Beaufschlagung durch die Abgase und damit auch gegen Verschleiß und Verschmutzung geschützt. Dabei wird der zweite Schallwandler vorteilhafterweise gegen den Abgasstrom durch eine strömungsgünstige Abdeckung abgeschirmt. Dadurch wird die Störung des Abgasstroms, also die Bildung von Turbulenzen in dem Abgasstrom, durch die Anbringung des zweiten Schallwandlers in dem Abgasstrom vermindert. Besonders vorteilhaft ist es, wenn auch der erste Schallwandler in Richtung des Abgasstromes angeordnet wird. Hierdurch wird auch der erste Schallwandler gegen eine direkte Beaufschlagung durch die Abgase und damit auch gegen Verschleiß und Verschmutzung geschützt. Als weiteres wird eine Beeinträchtigung der Schallmessung durch Anströmung vermieden.

Weitere Vorteile der erfindungsgemäßen Vorrichtung können sich ergeben, wenn die Abgasleitung, d.h. die Vorrichtung zur Sammlung und Ableitung der Abgase, welche vorzugsweise beide Schallwandler enthält, auch einen Katalysator, wie er regelmäßig zur Abgasnachbehandlung bei Verbrennungsmotoren notwendig ist, aufweist. Besonders vorteilhaft ist es, wenn der Katalysator derart ausgebildet und in der Vorrichtung derart angeordnet ist, daß in dem Raum hinter dem Katalysator ein weitgehend homogenes Schallfeld entsteht, in welchem sich die Schallwellen im wesentlichen in Richtung der Längsachse der Abgasleitung ausbreiten. Verursacht wird dies durch die stärkere Dämpfung der sich senkrecht zur Längsachse ausbreitenden Schallanteile durch Reflexion an den Wandungen der Katalysatorkanäle, während die in Richtung der Längsachse sich ausbreitenden Schallanteile den Katalysator weitgehend ungehindert passieren. Der zweite Schallwandler kann dann derart angeordnet und ausgerichtet werden, daß das Kompensationsschallfeld ebenfalls hauptsächlich Kompensationsschallwellen aufweist, die sich in Richtung der Längsachse der Abgasleitung ausbreiten. Die Schallkompensation wird hierdurch sehr effektiv, da sich die Kompensationsschallfront und die Schallfront im wesentlichen parallel zueinander befinden.

Eine bevorzugte Ausführungsform der erfindungsgemäßen Vorrichtung weist einen Rohrschalldämpfer auf, der den Raum umgibt, in welchem zumindest der zweite Schallwandler angeordnet ist. Besonders bevorzugt ist auch der erste Schallwandler in diesem Raum angeordnet. Der Rohrschalldämpfer ermöglicht eine weitere Reduzierung der Schallemissionen des Verbrennungsmotors. Insbesondere werden mit dem Rohrschalldämpfer zusätzlich diejenigen Schallwellen absorbiert, die sich senkrecht zur Längsachse der Abgasleitung ausbreiten und von dem abgestrahlten Kompensationsschall des zweiten Schallwandlers nicht direkt erfaßt und ausgelöscht werden können.

Die erfindungsgemäße Vorrichtung ist des weiteren vorzugsweise derart gestaltet, daß sie als integrale Baueinheit in die Abgasleitung bzw. in das Abgassammelrohr auf einfache Weise eingesetzt, entnommen und ausgetauscht werden kann. Diese Baueinheit umfaßt vorzugsweise den zweiten Schallwandler, besonders bevorzugt ebenfalls den ersten Schallwandler und weiter bevorzugt ebenfalls die elektronische Steuereinheit. Eine derartige Baueinheit erlaubt eine einfache Handhabung in der Praxis, ähnlich wie eine Lamda-Sonde. Allerdings muß sichergestellt werden, daß die Montage der Baueinheit in der Abgasleitung bzw. dem Abgasrohr mit der erforderlichen Genauigkeit erfolgt, um eine wirksame Schallkompensation zu erzielen. Dies kann beispielsweise durch einen genau gearbeiteten Einbausatz, etwa mit einem Gewinde mit Positionskontrolle, geschehen.

Die erfindungsgemäße Vorrichtung kann auch zur Diagnose des Zustands und des Betriebs des Verbrennungsmotors eingesetzt werden. Für diesen Zweck weist die erfindungsgemäße Vorrichtung eine Vergleichseinheit zum Vergleich der ersten Signale des ersten Schallwandlers mit Sollsignalen auf. Die Frequenz der betrachteten Schallwellen muß dabei nicht notwendigerweise genau bestimmt werden. Bei Vorliegen eines sehr engen Schallfrequenzspektrums kann unter Umständen auch auf eine Frequenzanalyse verzichtet werden und es können alle auftretenden Frequenzen innerhalb eines Bereiches als eine repräsentative Frequenz betrachtet werden. Es genügt, daß eine sinnvolle Differenzierung zwischen Schallwellen mit unterschiedlicher Frequenz getroffen werden kann, um das Schallbild bis zu einem praktisch notwendigen Grad aufzuschlüsseln. Dieser Grad kann je nach Anwendung und je nach Anforderungen an die Genauigkeit der Schallanalyse variieren.

Die ersten Signale werden in der Vergleichseinheit mit Sollsignalen verglichen, so daß gegebenenfalls Abweichungen festgestellt werden können. Es wird somit ein Ist-Schallbild mit einem Soll-Schallbild verglichen. Dieser Vergleich erlaubt eine Diagnose des Verbrennungsmotors, denn Verbrennungsmotoren haben für verschiedene Betriebszustände ein jeweils charakteristisches Schallbild. Störungen, z. B. durch Schäden am Antrieb verursachen eine Störung dieses Schallbildes. Dabei kann man in vielen Fällen aus der Art der Störung des Schallbildes auf die Art der Störung schließen. Zum Beispiel läßt das den Abgasen eines Verbrennungsmotors aufgeprägte Schallmuster Rückschlüsse auf den Zustand des Verbrennungsmotors zu, etwa auf nicht exakt schließende Auslaßventile, auf Zylinder, die trotz aktivierter Zylinderabschaltung in Betrieb sind, oder auf mangelnde Kompression eines Zylinders. Rückschlüsse wären aber auch auf schlechte Benzinqualität, die zum Klopfen oder Klingeln des Motors führt, möglich. Auf einen herkömmlichen Klopfsensor, der am Zylinderblock angebracht ist, könnte somit verzichtet werden. Die erfindungsgemäße Vorrichtung bietet dabei den Vorteil einer deutlich feineren und früheren Analyse des Motorzustands und des Verbrennungsablaufs, als das ein den Körperschall eines Bauteils registrierender Klopfsensor erreichen kann. Dieser Rückschluß auf den Zustand - also die dauerhafte Verfassung - oder auf den Betrieb bzw. Betriebszustand - also die temporäre Verfassung - des Verbrennungsmotors, erfordert in vielen Fällen weitere Bearbeitungsschritte, insbesondere weitere Vergleichsschritte. Auch ohne diese weitere Signalverarbeitung kann aber regelmäßig zumindest die Anwesenheit einer Störung festgestellt werden.

Im Rahmen des Diagnoseverfahrens für Verbrennungsmotoren werden die in dem ersten Schallwandler gewonnenen ersten Signale, Teile dieser ersten Signale oder von diesen ersten Signalen abgeleitete Sekundärsignale verwendet. Die erhaltenen ersten Signale enthalten regelmäßig Information über die Frequenz, über die Amplitude und auch über die Phase mehrerer Schallwellen. Die Diagnose des Verbrennungsmotors kann jedoch in einigen Fällen bereits anhand des Frequenzspektrums durchgeführt werden, ohne daß es auf die Amplitude und Phase ankommt. In diesen Fällen wird die Amplitude lediglich einen bestimmten Grenzwert übersteigen müssen, damit der erste Schallwandler der auftretenden Frequenz eine Folge gibt. Dieser Grenzwert kann auch einfach durch die Ansprechschwelle des ersten Schallwandlers bestimmt sein. Wenn dann etwa Abweichungen von vorbestimmter Größe oder Bedeutung des Ist-Spektrums von dem Soll-Spektrum auftreten, können daraus die o. g. Rückschlüsse auf den Zustand oder Betrieb des Verbrennungsmotors gezogen werden. Die Sollwerte werden für verschiedene typische Betriebszustände, z.B. unterschiedliche Drehzahlen, verschiedene Lastbereiche oder Betriebstemperaturen vorher ermittelt und in der Vergleichseinheit gespeichert, so daß im täglichen Betrieb für mehrere oder viele Betriebszustände ein Vergleich der Soll-Werte mit den Ist-Werten gezogen werden kann. Es ist dabei nicht notwendig, daß die volle Information der Schallkompensationseinheit ausgenutzt wird, daß also beispielsweise ein volles Frequenzspektrum von Ist-Werten mit den entsprechenden Soll-Werten verglichen wird. Ein selektiver Vergleich kann durchaus hinreichend sein. Der Vergleich selbst wird regelmäßig in einem Mikrochip oder Mikrocomputer durchgeführt, der ein Teil der Vergleichseinheit ist.

Vorzugsweise weist die erfindungsgemäße Vorrichtung zusätzlich eine Ausgabeeinheit zur Ausgabe eines Warnsignals bei Auftreten mindestens einer vorher bestimmten Abweichung der ersten Signale des ersten Schallwandlers von den Sollsignalen auf. Ein derartiges Warnsignal kann in einer schlichten Warnung durch eine Warnlampe bestehen, oder in der Aufforderung zur sofortigen Einstellung des Betriebs. Als Warnsignal im Sinne dieser Offenbarung gilt aber auch ein Signal, das automatisch eine bestimmte Folge herbeiführt, etwa eine Lastanpassung, eine Änderung des Zündzeitpunkts, eine Notabschaltung oder eine Information auf einem Display, daß eine bestimmte Fehlfunktion vorliegt.

Die erfindungsgemäße Vorrichtung umfaßt vorzugsweise auch eine Auswahleinheit zur Auswahl von ersten Signalen des ersten Schallwandlers, die einem oder mehreren bestimmten Frequenzbereichen entsprechen, zur Durchführung des Signalvergleichs. Damit wird ein selektiver Vergleich von Frequenzen ermöglicht, der weniger Rechnerkapazität benötigt und deshalb schneller erfolgen kann.

Eine weitere vorteilhafte Ausführungsform der erfindungsgemäßen Vorrichtung weist eine Servicekontrolleinheit zur Berechnung und Anzeige des Fälligkeitstermins des nächsten Services für den Verbrennungsmotor aufgrund des Zeitverhaltens von ersten Signalen des ersten Schallwandlers im Vergleich zu den Soll-Signalen des jeweiligen Betriebszustandes auf. Die Servicekontrolleinheit beobachtet das Zeitverhalten der Ist-Werte von ersten Signalen oder Teilen davon, etwa der Frequenz, und zieht daraus Schlüsse auf eine demnächst notwendige Inspektion des Motors. Dies ist möglich, weil bestimmte Frequenzen in dem Schallspektrum der Abgase eines Motors immer häufiger auftreten, wenn der Motor reif für eine Inspektion oder Überholung ist. Somit können mit Hilfe der vorliegenden Ausführungsform der Erfindung individuelle Inspektionsintervalle realisiert werden, die nicht nur Kosten in erheblichem Umfang dadurch sparen können, daß die Inspektionsintervalle im Durchschnitt länger werden, sondern es kann auch ein Zugewinn an Betriebssicherheit dadurch erreicht werden, daß Inspektionsintervalle tatsächlich abgekürzt werden.

Erfindungsgemäß wird weiterhin ein Verfahren zur Reduzierung der Schallemission von Verbrennungsmotoren in einer Abgasleitung, die einen Abgasstrom führt, bereitgestellt, welches folgende Schritte aufweist: Umwandeln von Schallwellen in erste Signale in mindestens einem ersten Schallwandler, wobei die Signale ein Maß für die Frequenz, die Amplitude und für die Phase der Schallwellen sind, Umwandeln der ersten Signale in zweite Signale in einer elektronischen Steuereinheit und Umwandeln der zweiten Signale in Kompensationsschallwellen in mindestens einem zweiten Schallwandler, wobei die Kompensationsschallwellen eine Frequenz, eine Amplitude und Phase aufweisen, so daß sich die Schallwellen und die Kompensationsschallwellen wenigstens teilweise auslöschen, und wobei der zweite Schallwandler die Kompensationsschallwellen zentral im Abgasstrom aussendet.

Das erfindungsgemäße Verfahren weist bevorzugte Ausführungsformen auf, die denen der voranstehenden, bevorzugten Ausführungsformen der erfindungsgemäßen Vorrichtung entsprechen. Es wird insofern auf die obigen Ausführungen verwiesen. Das erfindungsgemäße Verfahren kann demgemäß auch die Diagnose des Verbrennungsantriebs umfassen.

Die vorliegende Erfindung stellt somit eine Vorrichtung und ein Verfahren zur Reduzierung der Schallemission von Verbrennungsmotoren in einer Abgasleitung zur Verfügung, wobei durch eine Kompensation des Schalls an der Schallquelle die Schallemission eines Verbrennungsmotors zugleich für die Umwelt und für die Insassen auf einfache und effiziente Weise reduziert wird. Dabei ist zumindest der zweite Schallwandler zentral in dem Abgasstrom angeordnet, wodurch bestmögliche symmetrische, lateral begrenzte akustische Bedingungen geschaffen werden. Die Abstrahlung der Kompensationsschallwellen kann bei dieser Lösung im wesentlichen parallel zur Hauptschallschwingungsebene erfolgen, wodurch ein hoher Wirkungsgrad der Schallkompensation erzielt wird. Im Unterschied zum bekannten Stand der Technik aktiver Schallreduktion, in dem regelmäßig laterale Schallkompensationskonzepte entwickelt werden, liegt der vorliegenden Erfindung eine Konzeption zentraler Schallkompensation zugrunde. Die erfindungsgemäße Vorrichtung kann auf einfache Weise in der Abgasleitung montiert werden, ohne daß große konstruktive Eingriffe vorgenommen werden müssen. Die erfindungsgemäße Vorrichtung kann weiterhin, erweitert um eine Vergleichseinheit, auch zur Diagnose von Verbrennungsmotoren eingesetzt werden. Damit kann jederzeit und differenziert der Zustand eines Verbrennungsmotors bestimmt werden.

Die Erfindung wird im folgenden beispielhaft anhand der Figuren beschrieben.

Dabei zeigen:
- Figur 1:: Eine Ausführungsform der erfindungsgemäßen Vorrichtung zur Reduzierung der Schallemission von Verbrennungsmotoren mit Diagnosefunktion
- Figur 2:: Ein schematisches Schaltbild zur Funktion der erfindungsgemäßen Vorrichtung.

### Liste der Bezugszeichen

- 1: Verbrennungsmotor (nicht dargestellt)
- 2: Abgasleitung
- 3: Abgasstrom
- 4: Aufweitung in der Abgasleitung 2
- 5: Katalysator
- 6: Einlaß des Katalysators 5
- 7: Auslaß des Katalysators 5
- 8: Luftspaltisolierung
- 9: Einbauraum für Schallkompensationseinheit 12
- 10: Lochblech
- 11: Schallabsorptionseinlage (Mineralwolle)
- 12: Schallkompensationseinheit
- 13: erster Schallwandler (z.B. Mikrofon)
- 14: elektronische Steuereinheit (Mikroprozessor)
- 15: zweiter Schallwandler (z.B. Lautsprecher)
- 16: Abdeckung für die Schallkompensationseinheit 12
- 17: Gerätesockel
- 18: Öffnungen im Gerätesockel 17
- 19: Montageöffnung in der Abgasleitung 2
- 20: Schallkompensator für akustischen Nebenweg
- 21: Elektrozuleitung
- 22: Verbindungsleitung zur Vergleichseinheit 23
- 23: Vergleichseinheit (nicht dargestellt)
- 24: Lambda-Sonde
- 25: Querschnitt des Endrohrs

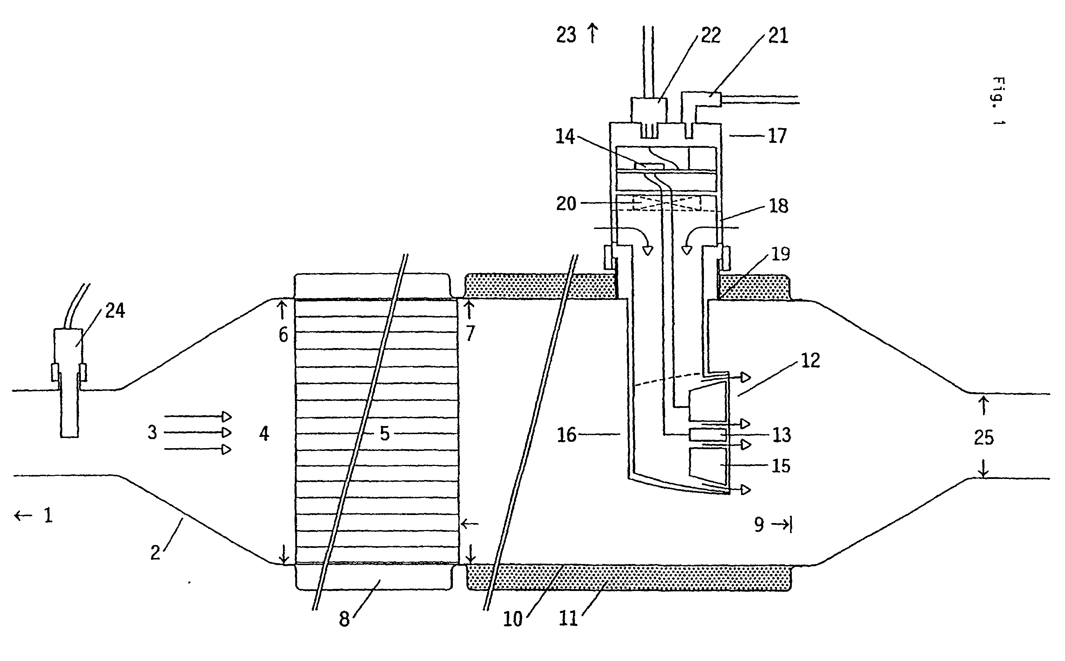

Figur 1 zeigt eine Abgasleitung 2 zur Sammlung und Ableitung eines Abgasstroms 3, der durch mehrere Pfeile symbolisiert ist, aus einem nicht gezeigten Verbrennungsmotor 1, der in Richtung des Pfeils 1 angeordnet ist. Die Abgasleitung 2 enthält in einer Aufweitung 4 einen Katalysator 5 mit thermischer Luftspaltisolierung 8. Der Katalysator 5 kann beispielsweise ein für Kraftfahrzeuge geeigneter Metallkatalysator sein. Dieser hat einen Einlaß 6 und einen Auslaß 7 für den Abgasstrom 3. Seine innere Struktur ist derart gewählt, daß der Abgasstrom 3 den Katalysator 5 an dessen Auslaß 7 in weitgehend parallelem, wirbelfreiem Gasfluß verläßt.

Der Katalysator 5 bewirkt hier eine Gleichrichtung des vor dem Katalysator 5 weitgehend ungerichteten Schallfeldes des Abgasstroms 3. In dem Katatalysator 5 werden die zur Längsachse des Katalysators 5 und somit auch zur Längsachse der Abgasleitung 2 senkrecht stehenden Anteile der Schallwellen stark gedämpft, wohingegen die längsgerichteten Anteile der Schallwellen bevorzugt durchgelassen werden und ein relativ gut gleichgerichtetes, d.h. homogenes, Schallfeld in dem Raum 9 nach dem Katalysator 5 erhalten wird. In dem Raum 9 sind die Schallwellen im wesentlichen in Richtung der Längsachse der Abgasleitung 2 ausgerichtet. Das Schallfeld im Raum 9 ist zur Abstrahlebene des zweiten Schallwandlers 15, also zur Kompensationsschallebene, weitgehend parallel.

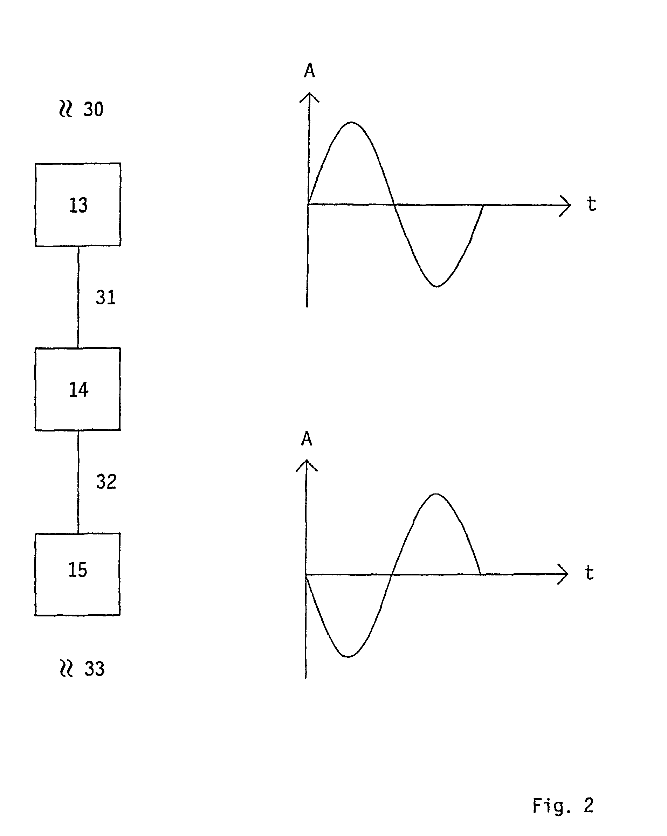

Nach Verlassen des Katalysators 5 trifft der Abgasstrom 3 auf die Schallkompensationseinheit 12, die aus einem Lautsprecher 15 und einem in dessen Mitte angeordneten Mikrofon 13 besteht. Dabei ist das Mikrofon 13 in dem Lautsprecher 15 angeordnet, um einerseits Platz zu sparen und um andererseits den Schall möglichst genau dort zu erfassen, wo dann auch die Kompensationsschallwellen ausgesandt werden. Beide Schallwandler, also das Mikrofon 13 und der Lautsprecher 15, sind in Richtung des Abgasstroms 3 angeordnet, um generell deren Beaufschlagung mit Abgasen zu vermeiden. Dies vermeidet einerseits deren Verschmutzung durch den Abgasstrom 3 und deren Beschädigung durch feine, sich ablösende Katalysatorpartikel und vermindert andererseits den Strömungswiderstand der Schallkompensationseinheit 12. Auf die Funktionsweise der vorliegenden Erfindung wird nachfolgend noch anhand der Figur 2 eingegangen.

Figur 1 zeigt weiterhin eine Lambdasonde 24 mit ihrer Zuleitung, wobei die Sonde in ähnlicher Weise in der Abgasleitung 2 angebracht ist, wie die erfindungsgemäße Vorrichtung.

Die erfindungsgemäße Vorrichtung weist des weiteren einen Rohrschalldämpfer auf, der entlang eines Abschnittes und um den Umfang der Abgasleitung 2 angeordnet ist. Dieser Abschnitt erstreckt sich von dem Auslaß 7 des Katalysators 5 bis zum Ende der Aufweitung 4 hinter der Schallkompensationseinheit 12.

Im Raum 9 der Abgasleitung 2, in welchem die Schallkompensationseinheit 12 angeordnet ist, weist der Rohrschalldämpfer eine Schallabsorptionseinlage 11, beispielsweise Mineralwolle, auf. Die Schallabsorbtionseinlage 11 füllt den Raum zwischen der Wand der Abgasleitung 2 und der Außenwand des Rohrschalldämpfers aus. Die Wand der Abgasleitung 2 ist in diesem Abschnitt als Lochblech 10 ausgeführt. Von dem Rohrschalldämpfer werden vor allem diejenigen Schallwellen absorbiert, die sich senkrecht zur Längsachse der Abgasleitung ausbreiten. Dagegen werden von der Schallkompensationseinheit 12 vor allem die Anteile des Abgasschallfeldes erfaßt, die sich in Richtung der Längsachse der Abgasleitung 2 ausbreiten. Die Schallkompensationseinheit 12 ist zentral in der Abgasleitung 2 angeordnet, so daß symmetrische und damit gut kalkulierbare akustische Verhältnisse gegeben sind. Sie ist in der Aufweitung 4 angeordnet, wo der erforderliche Einbauquerschnitt für die Schallkompensationseinheit 12 ohne zusätzlichen Querschnittswechsel bereits zur Verfügung steht.

Die Schallkompensationseinheit 12 ist mit einer strömungsgünstigen Verkleidung 16 gegen den Abgasstrom 3 aus dem Katalysator 5 abgeschirmt. Diese Verkleidung erstreckt sich von der Mitte der Abgasleitung 2, wo sich die Schallwandler befinden, bis zum Gerätesockel 17 an der Wand der Abgasleitung 2. Hierbei bleiben in der Verkleidung 16 strömungsabgewandte Öffnungen für das Mikrofon 13 und den Lautsprecher 15 frei. Das Mikrofon 13 und der Lautsprecher 15 sind innerhalb der Verkleidung 16 derart angeordnet, daß zwischen dem Mikrofon 13 und dem Lautsprecher 15, wie auch zwischen dem Lautsprecher 15 und der Verkleidung 16 zumindest Spalte frei bleiben, durch die Kühlluft strömen kann. Zur Kühlung der Schallkompensationseinheit 12 kann Außenluft durch entsprechende Öffnungen 19 im Gerätesockel 17 in die Verkleidung 16 hineingeführt werden. Die Kühlluft kann dann, die Schallwandler einschließend, nach außen in die Abgasleitung in den Abgasstrom abfließen und verhindert gleichzeitig das Entstehen rückströmender Abgasturbulenzen, die das Mikrofon 13 oder den Lautsprecher 15 beaufschlagen könnten. Die Strömungsrichtung der Kühlluft ist durch die Pfeile innerhalb der Verkleidung 16 angedeutet. Die Kühlluft fließt entweder automatisch aufgrund des dynamischen Drucks, der durch den Abgasstrom 3 in der Abgasleitung erzeugt wird, nach, oder wird unter entsprechendem Druck durch einen Ventilator in die Verkleidung 16 gefördert. Auf diese Weise können die Schallwandler 13, 15 thermisch gut kontrolliert werden.

Über die Elektrozuleitung 21 wird die Schallkompensationseinheit 12 mit Strom versorgt. Die Baueinheit aus Schallkompensationseinheit 12 mit Gerätesockel 17, elektronischer Steuereinheit 14, und ggf. Schallkompensator 20 wird durch eine Montageöffnung 19 in die Abgasleitung 2 eingeführt und darin etwa mit Hilfe eines exakten Schraubengewindes oder einer entsprechend genau funktionierenden Steckverbindung fixiert. Damit ist die erfindungsgemäße Vorrichtung auf einfache Weise montierbar und demontierbar, also im Falle eines Schadens auch leicht austauschbar. Die Fixierung und Justierung der Schallkompensationseinheit 12 in der Abgasleitung 2 muß allerdings so genau erfolgen, daß die Schallkompensation dauerhaft zuverlässig funktioniert. Sie soll darüber hinaus schwingungsfrei in der Abgasleitung 2 angebracht sein.

Für den akustischen Nebenweg, der durch die Verkleidung 16 und die Öffnungen 18 in dem Gerätesockel 17 entstehen könnte, ist ein Schallkompensator 20 vorgesehen, der innerhalb des Gerätesockels 17 kurz oberhalb der Öffnungen 18 angeordnet ist. Der Schallkompensator 20 funktioniert nach dem oben vorgestellten Prinzip.

Die erfindungsgemäße Vorrichtung weist des weiteren eine elektronische Steuereinheit 14 in Form eines Mikroprozessors auf. Die elektronische Steuereinheit ist über Leitungen mit dem Mikrofon 13 und dem Lautsprecher 15 der Schallkompensationseinheit 12 verbunden. Die elektronische Steuereinheit 14 ist in dem Gerätesockel 17 angeordnet und dort vor zu hoher thermischer Beanspruchung geschützt.

Figur 2 zeigt eine schematische Darstellung der Funktionsweise der vorliegenden Erfindung. Die Abgasschallwellen 30 treffen auf den ersten Schallwandler 13, etwa ein Mikrofon, und werden in erste Signale 31, z.B. in elektrische Signale umgesetzt, die ein Maß für die Frequenz, Amplitude und die Phase der Schallwellen 30 sind. In der elektronischen Steuereinheit 14 werden die ersten Signale 31 aufbereitet und für die Schallkompensation in zweite Signale 32 umgesetzt, die gegenüber den ersten Signalen 31 um 180° phasenversetzt sind. Die Schallwellen 30 können dabei auch z. B. einer Fourieranalyse unterzogen werden, um das komplexe Schallbild in elementare Sinusschwingungen zu zerlegen. Eine derartige Sinusschwingung ist in Fig. 2 dargestellt. Die zweiten Signale 32 werden dann an den zweiten Schallwandler 15, etwa einen Lautsprecher, geleitet, der entsprechend den zweiten Signalen 32 Kompensationsschallwellen 33 ausgibt. Falls eine Fourieranalyse durchgeführt wurde, wird beispielsweise eine Elementarkompensationswelle pro Elementarwelle ausgestrahlt. Eine solche Elementarkompensationswelle ist ebenfalls in Figur 2 dargestellt. Die Kompensationsschallwellen 33 weisen im Vergleich zu den dazugehörigen Abgasschallwellen 30 umgekehrte, d.h. um 180° verschobene Phase, gleiche Frequenz und gleiche oder zur Erzielung eines geforderten Restschallpegels verminderte Amplitude auf.

Die vorliegende Ausführungsform der erfindungsgemäßen Vorrichtung in Fig. 1 umfaßt des weiteren Einrichtungen zur Diagnose des Zustands oder Betriebs des Verbrennungsmotors 1. Von dem ersten Schallwandler 13 werden die den Schall in der Abgasleitung 2 darstellenden ersten Signale 31 der elektronischen Steuereinheit 14 zugeführt und dort für die Schallkompensation aufbereitet. Eine Vergleichseinheit 23, welche im Motormanagement integriert ist und über eine Leitung 22 mit der elektronischen Steuereinheit und/oder direkt mit dem ersten Schallwandler 13 verbunden ist, erhält für den vorstehend beschriebenen Vergleich der Soll- und Ist-Werte die erforderlichen Daten entweder von der elektronischen Steuereinheit 14 oder direkt die ersten Signale des ersten Schallwandlers 13.

Nach der Schallkompensationseinheit 12 verengt sich die Abgasleitung 2 zu einem kleineren Querschnitt 25. Das Maß der Schallkompensation kann hier auf ein gewünschtes Niveau eingestellt werden, in dem die Amplitude der Kompensationsschallwellen 33 variiert wird. Diese wird vorzugsweise unterhalb der Amplitude der Abgasschallwellen liegen, um einen Restschall zu erhalten, der sowohl Warnfunktion hat wie auch zur Schaffung eines bestimmten erwünschten Klangbildes dienen kann. Diese Art und Weise der Schallkompensation ist nicht nur gewichtssparend und raumökonomisch bei sehr geringem spezifischen Abgasgegendruck, sondern auch einfach und damit kostengünstig. Die vorliegende Ausführungsform der erfindungsgemäßen Vorrichtung bietet darüber hinaus die Möglichkeit einer Zustands- und Betriebsdiagnose für einen Verbrennungsmotor auf einfache und kostensparende Weise.

## Patentansprüche

1. Vorrichtung zur Reduzierung der Schallemission von Verbrennungsmotoren (1) in einer Abgasleitung (2), die einen Abgasstrom (3) führt, aufweisend:
(a) mindestens einen ersten Schallwandler (13) zur Umwandlung von Schallwellen (30) in erste Signale (31), die ein Maß für die Frequenz, die Amplitude und für die Phase der Schallwellen (30) sind,
(b) eine elektronische Steuereinheit (14) zur Umwandlung der ersten Signale (31) in zweite Signale (32) und
(c) mindestens einen zweiten Schallwandler (15), der zentral im Abgasstrom (3) angeordnet ist, zur Umwandlung der zweiten Signale (32) in Kompensationsschallwellen (33), die eine Frequenz, eine Amplitude und eine Phase aufweisen, so daß sich die Schallwellen (30) und die Kompensationsschallwellen (33) wenigstens teilweise auslöschen,
**dadurch gekennzeichnet, daß**
(d) der zweite Schallwandler (15) gegen den Abgasstrom (3) durch eine strömungsgünstige Abdeckung abgeschirmt ist, und
(e) mit Hilfe von Kühlluft gekühlt wird, wobei die Kühlluft an dem Schallwandler (15) vorbei nach außen in die Abgasleitung (2) in Richtung des Abgasstroms (3) abfließt und dadurch gleichzeitig das Entstehen rückströmender Abgasturbulenzen verhindert.

2. Vorrichtung nach Anspruch 1, wobei die Vorrichtung einen Katalysator (5) mit einem Einlaß (6) und einem Auslaß (7) für den Abgasstrom (3) enthält, der derart ausgebildet und angeordnet ist, daß in dem Raum (9) hinter dem Katalysator (5) ein weitgehend homogenes Schallfeld entsteht, in welchem sich die Schallwellen (30) im wesentlichen in Richtung der Längsachse der Abgasleitung (2) ausbreiten.

3. Vorrichtung nach einem der Ansprüche 1 oder 2, wobei die Vorrichtung eine Vorrichtung zur Diagnose des Zustands und des Betriebs des Verbrennungsmotors (1) aufweist.

4. Verfahren zur Reduzierung der Schallemission von Verbrennungsmotoren (1) in einer Abgasleitung (2), die einen Abgasstrom (3) führt, aufweisend folgende Schritte:
(a) Umwandeln von Schallwellen (30) in erste Signale (31) in mindestens einem ersten Schallwandler (13), wobei die Signale (31) ein Maß für die Frequenz, die Amplitude und für die Phase der Schallwellen (30) sind,
(b) Umwandeln der ersten Signale (31) in zweite Signale (32) in einer elektronischen Steuereinheit (14),
(c) Umwandeln der zweiten Signale (32) in Kompensationsschallwellen (33) in mindestens einem zweiten Schallwandler (15), wobei die Kompensationsschallwellen (33) eine Frequenz, eine Amplitude und Phase aufweisen, so daß sich die Schallwellen (30) und die Kompensationsschallwellen (33) wenigstens teilweise auslöschen, und wobei der zweite Schallwandler (15) die Kompensationsschallwellen (33) zentral im Abgasstrom (3) aussendet,
(d) Abschirmung des zweiten Schallwandlers (15) gegen den Abgasstrom (3) durch eine strömungsgünstige Abdeckung, und
(e) Kühlung des zweiten Schallwandlers (15) mit Hilfe von Kühlluft, wobei die Kühlluft an dem Schallwandler (15) vorbei nach außen in die Abgasleitung (2) in Richtung des Abgasstroms (3) abfließt und dadurch gleichzeitig das Entstehen rückströmender Abgasturbulenzen verhindert.

5. Verfahren nach Anspruch 4, aufweisend einen weiteren Verfahrensschritt, bei welchem mit Hilfe eines entsprechend ausgebildeten und angeordneten Katalysators (5) in dem Raum (9) hinter dem Katalysator (5) ein weitgehend homogenes Schallfeld entsteht, in welchem sich die Schallwellen (30) im wesentlichen in Richtung der Längsachse der Abgasleitung (2) ausbreiten.

6. Verfahren nach einem der Ansprüche 4 oder 5, aufweisend einen weiteren Verfahrensschritt, bei welchem mit Hilfe einer Vorrichtung der Zustand und der Betrieb des Verbrennungsmotors diagnostiziert wird.

## Claims

1. Apparatus for the reduction of the sound emission from internal combustion engines (1) in an exhaust line (2), which carries an exhaust gas flow (3), comprising:
(a) at least one first sound transducer (13) for converting sound waves (30) into first signals (31), which are a measure of the frequency, the amplitude and the phase of the sound waves (30),
(b) an electronic control unit (14) for converting the first signals (31) into second signals (32) and
(c) at least one second sound transducer (15), which is arranged centrally in the exhaust gas flow (3), for converting the second signals (32) into compensating sound waves (33), which have a frequency, an amplitude and a phase, such that the sound waves (30) and the compensating sound waves (33) at least partially cancel one another out,
**characterized in that**
(d) the second sound transducer (15) being shielded against the exhaust gas flow (3) by a streamlined casing, and
(e) being cooled by means of cooling air, wherein the cooling air flows past the sound transducer (15) out into the exhaust line (2) in the direction of the exhaust gas flow (3) and thereby at the same time preventing the occurrence of exhaust gas backflow turbulence.

2. Apparatus according to Claim 1, containing a catalytic converter (5) having an inlet (6) and an outlet (7) for the exhaust gas flow (3), said catalytic converter being designed and arranged in such a way that a largely homogeneous sound field is produced in the space (9) downstream of the catalytic converter (5), in which field the sound waves (30) are propagated essentially in the direction of the longitudinal axis of the exhaust line (2).

3. Apparatus according to one of the Claims 1 or 2, having a device for diagnosing the condition and the running of the internal combustion engine (1).

4. Method for the reduction of the sound emission from internal combustion engines (1) in an exhaust line (2) carrying an exhaust gas flow (3), the method comprising the following steps:
(a) conversion of sound waves (30) into first signals (31) in at least one first sound transducer (13), the signals (31) being a measure of the frequency, the amplitude and the phase of the sound waves (30),
(b) conversion of the first signals (31) into second signals (32) in an electronic control unit (14),
(c) conversion of the second signals (32) into compensating sound waves (33) in at least one second sound transducer (15), the compensating sound waves (33) having a frequency, an amplitude and phase such that the sound waves (30) and the compensating sound waves (33) at least partially cancel one another out, and the second sound transducer (15) emitting the compensating sound waves (33) centrally in the exhaust gas flow (3).
(d) shielding of the second sound transducer (15) against the exhaust gas flow (3) by means of a streamlined cover, and
(e) cooling of the second sound transducer (15) by means of cooling air, the cooling air flowing past the sound transducer (15) out into the exhaust line (2) in the direction of the exhaust gas flow (3) and thereby at the same time preventing the occurrence of exhaust gas backflow turbulence.

5. Method according to Claim 4, comprising a further step, in which by means of a catalytic converter (5), correspondingly designed and arranged, a largely homogeneous sound field is produced in the space (9) downstream of the catalytic converter (5), in which field the sound waves (30) are propagated essentially in the direction of the longitudinal axis of the exhaust line (2).

6. Method according to one of the Claims 4 or 5, comprising a further step, in which the condition and running of the internal combustion engine is diagnosed by means of a device.

## Revendications

1. Dispositif pour réduire l'émission sonore de moteurs à combustion interne (1) dans une conduite d'échappement (2) qui achemine un courant d'échappement (3), comprenant :
(a) au moins un premier transducteur acoustique (13) pour convertir des ondes acoustiques (30) en premiers signaux (31) qui sont une mesure de la fréquence, l'amplitude et de la phase des ondes acoustiques (30),
(b) une unité de commande électronique (14) pour convertir les premiers signaux (31) en seconds signaux (32) et
(c) au moins un second transducteur acoustique (15) qui est disposé en position centrale dans le courant d'échappement (3), pour convertir les seconds signaux (32) en ondes acoustiques de compensation (33) qui présentent une fréquence, une amplitude et une phase telles que les ondes acoustiques (30) et les ondes acoustiques de compensation (33) s'annulent au moins partiellement,
**caractérisé en ce que**
(d) le second transducteur acoustique (15) est protégé contre le courant d'échappement (3) par un capot favorisant l'écoulement, et
(e) le refroidissement est assuré par de l'air de refroidissement, l'air de refroidissement s'écoulant le long du transducteur acoustique (15) vers l'extérieur dans la conduite d'échappement (2) dans le sens du courant d'échappement (3) et s'opposant ainsi en même temps à la formation de turbulences d'échappement refluantes.

2. Dispositif selon la revendication 1, le dispositif contenant un catalyseur (5) avec une entrée (6) et une sortie (7) pour le courant d'échappement (3), ledit catalyseur étant conçu et disposé de façon à créer, dans la chambre (9) derrière le catalyseur (5), un champ sonore en grande partie homogène dans lequel les ondes acoustiques (30) se propagent pour l'essentiel dans la direction de l'axe longitudinal de la conduite d'échappement (2).

3. Dispositif selon une des revendications 1 ou 2, le dispositif comprenant un dispositif pour diagnostiquer l'état et le fonctionnement du moteur à combustion interne (1).

4. Procédé pour réduire l'émission sonore de moteurs à combustion interne (1) dans une conduite d'échappement (2) qui achemine un courant d'échappement (3), comprenant les étapes suivantes :
(a) convertir des ondes acoustiques (30) en premiers signaux (31) dans au moins un premier transducteur acoustique (13), les signaux (31) étant une mesure de la fréquence, de l'amplitude et de la phase des ondes acoustiques (30),
(b) convertir les premiers signaux (31) en seconds signaux (32) dans une unité de commande électronique (14),
(c) convertir les seconds signaux (32) en ondes acoustiques de compensation (33) dans au moins un second transducteur acoustique (15), les ondes acoustiques de compensation (33) présentant une fréquence, une amplitude et une phase telles que les ondes acoustiques (30) et les ondes acoustiques de compensation (33) s'annulent au moins partiellement, et le second transducteur acoustique (15) émettant les ondes acoustiques de compensation (33) en position centrale dans le courant d'échappement (3),
(d) protéger le second transducteur acoustique (15) contre le courant d'échappement (3) par un capot favorisant l'écoulement, et
(e) refroidir le second transducteur acoustique (15) à l'aide d'air de refroidissement, l'air de refroidissement s'écoulant le long du transducteur acoustique (15) vers l'extérieur dans la conduite d'échappement (2) dans le sens du courant d'échappement (3) et s'opposant ainsi en même temps à la formation de turbulences d'échappement refluantes.

5. Procédé selon la revendication 4, comportant une étape de procédé supplémentaire, dans laquelle est créé dans la chambre (9) derrière le catalyseur (5), à l'aide d'un catalyseur (5) conçu et disposé de façon appropriée, un champ sonore en grande partie homogène dans lequel les ondes acoustiques (30) se propagent pour l'essentiel dans la direction de l'axe longitudinal de la conduite d'échappement (2).

6. Procédé selon une des revendications 4 ou 5, comprenant une étape de procédé supplémentaire, dans laquelle l'état et le fonctionnement du moteur à combustion interne sont diagnostiqués à l'aide d'un dispositif.
